(19) Europäisches Patentamt / European Patent Office / Office européen des brevets

(11) **EP 2 733 260 B1**

(12) **EUROPEAN PATENT SPECIFICATION**

(45) Date of publication and mention
of the grant of the patent:
**20.02.2019 Bulletin 2019/08**

(51) Int Cl.:
***D21H 19/40*** *(2006.01)*

(21) Application number: **12193343.6**

(22) Date of filing: **20.11.2012**

(54) **Method for manufacturing a coating composition, coating composition and its use**

Verfahren zur Herstellung einer Beschichtungszusammensetzung, Beschichtungszusammensetzung und deren Verwendung

Procédé de fabrication d'une composition de revêtement, composition de revêtement et son utilisation

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**21.05.2014 Bulletin 2014/21**

(73) Proprietor: **Kemira Oyj
00180 Helsinki (FI)**

(72) Inventors:
• **Hemmes, Jan-Luiken
51467 Bergisch Gladbach (DE)**
• **Puttonen, Sami
FI-00140 Helsinki (FI)**

• **Huhtala Kimmo
FI-20900 Turku (FI)**
• **Virtala, Kai
FI-00170 Helsinki (FI)**

(74) Representative: **Berggren Oy, Turku
P.O. Box 99
Tykistökatu 2-4 B
20521 Turku (FI)**

(56) References cited:
EP-A1- 0 634 283   EP-A1- 1 245 731
EP-A1- 1 743 976   US-A- 3 738 957
US-A- 5 612 281    US-A1- 2001 004 487
US-A1- 2006 112 855   US-A1- 2007 202 281

**Description**

The present invention relates to method for manufacturing a coating composition, coating composition and its use according to the preambles of the enclosed claims.

Water-based inks are popular in printing, because they environmentally friendly. For example, flexographic printing, rotogravure and inkjet printing utilize water-based inks.

Flexographic printing uses a flexible relief plate, which comprises a positive mirrored master of the image to be produced. Flexographic printing is especially used for printing different types of food packages, the printing substrate being e.g. cardboard.

Rotogravure uses a gravure cylinder, onto which the image to be produced is engraved. It is used, for example, for printing of magazines and packages.

Inkjet printing is one of the digital printing methods. It is widely used in printers intended for office and home use, as well as in commercial printing. In digital printing the printed document is directly produced from an electronic data file, whereby every print may be different from each other, as no printing plates are required. In inkjet printing droplets of ink are ejected from a nozzle at high speed towards a printing sheet. Inkjet printing makes specific demands on the printing substrate, which usually is a printing sheet made of paper or board. For example, ink colour density, ink absorption, ink drying time and gamut values are important parameters that are optimised for inkjet recording sheets. Because the interest in digital printing is increasing also the demand for printing substrates suitable for high-speed inkjet printing machines may be expected to increase.

Use of water-based inks in the described printing methods may also create new problems. The water-based inks may have a high surface tension, which makes the wetting of the printing substrate more difficult. This may lead to unwanted smearing of the printed image in flexographic printing and rotogravure if the ink remains on the surface of the printing substrate too long.

In inkjet printing both pigment inks and dye based inks are used. Pigment based inks are not absorbed by the recording substrate but remain on the surface, while the dye inks are absorbed into the recording sheet. This difference produces differences in the obtained printed image, e.g. in colour intensity and stability. Typically the properties of ink jet recording sheets are optimised either for pigment inks or dye inks. Due to the different behaviour of pigment inks and dye inks it has been hard to provide an ink jet printing sheet that would be optimal for both types of inks.

EP 1775 141 discloses recording sheets with improved image dry time. The recording sheet has at least one surface, to which is applied a liquid composition having one or more water soluble divalent metal salts, preferably admixed with one or more starches. However, the liquid composition may easily be adsorbed into the recording sheet, which may reduce the anticipated improvements. The proposed recording sheet is more suitable for pigment inks and do not necessarily provide optimal results when dye based inks are used in the inkjet printing.

US 2007/0202281 discloses a coating substrate made from coloured paper coated with a coating comprising silica or fumed metal oxide. An opaque coating is formed which improves the L* and b* values of the coloured paper.

US 2001/004487 discloses an ink-jet recording material which comprises a support and a layer containing at least one of a polymer latex and a resin emulsion in combination with solid fine particles, and at least one layer containing fumed silica formed on the said layer.

EP 0634 283 discloses a cast coated paper for ink jet recording. The paper comprises a base paper, an undercoating layer comprising a pigment and an adhesive, and a cast coating layer comprising a polymer formed by polymerisation of an ethylenically unsaturated monomer.

An object of the present invention is to minimise or even eliminate the disadvantages existing in the prior art.

An object is also to provide a method with which an improved coating composition for different printing methods may be produced.

A still further object of the present invention is to provide a coating composition which improves the printing result of the paper or paperboard in printing, especially in ink jet printing.

These objects are attained with the invention having the characteristics presented below in the characterising parts of the independent claims.

Typical method according to the present invention for manufacturing a coating composition for a printing substrate is defined in claim 1. It comprises, inter alia, at least the step of mixing together

- colloidal silica particles, and
- an aqueous dispersion of a synthetic polymer, as well as
- a binder solution.

The obtained mixture is used for forming a coating composition to be applied on the printing substrate comprising lignocellulosic fibres.

Typical coating composition according to the present invention is defined in claim 10. It is prepared by using the method according to the present invention and it comprises binder and a dispersed cationic component derived from synthetic polymer and colloidal silica particles.

Now it has been surprisingly found out that it is possible to obtain a coating composition, which produces unexpectedly good printing properties when it is applied on a recording sheet surface, especially when water based inks are used.

The coating composition may be obtained simply by mixing colloidal silica particles and an aqueous dispersion of a synthetic polymer, as well as a binder solution. It is speculated, without wishing to be bound by a theory, that the colloidal silica particles form flocs when they interact with the other components of the mixture. These flocs are large enough so they are retained at the surface of the recording sheet and it is assumed that they have a high surface area, which provides suitable active surface for interaction both with pigment inks and dye inks used in printing of sheet-like printing substrates.

Colloidal silica is used in amount of 30 - 85 weight-%, more preferably 50 - 80 weight-%, calculated from the total dry weight of colloidal silica particles, synthetic polymer and binder. According to the invention the colloidal silica particles have a diameter in the range of 0.5 - 150 nm, preferably 0.5 - 50 nm, more preferably 1 - 15 nm, even more preferably 2 - 7 nm, advantageously 3 - 5 nm. Colloidal silica is here understood as a stable aqueous suspension of amorphous non-porous silica particles. The dry solids content of the colloidal silica dispersion is typically 10 - 25 weight-%, preferably 15 - 20 weight-%. Typically individual colloidal silica particles are spherical or nearly spherical. According to one preferred embodiment of the invention anionic colloidal silica may be used. Colloidal silica is prepared by starting from an alkali silicate, typically sodium silicate suspension, and allowing the silica to polymerise and form particles. Colloidal silica should not be mixed up with fumed silica, which is pyrogenically produced e.g. by combustion of silicon tetrachloride.

According to one preferred embodiment of the invention the synthetic polymer is cationic polymer, especially cationic polyacrylamide. Colloidal silica particles and the synthetic polymer have typically opposite charges. Thus, according to one preferred embodiment of the invention the synthetic polymer is a cationic polymer, provided that the colloidal silica particles are anionic. Charge density of the synthetic cationic polymer may be $\geq 5$ meq/g, typically 5 - 20 meq/g, preferably 5.5 - 8 meq/g, more preferably 5.5 - 6.5 meq/g. Charge densities are measured by using the standard method SCAN W 12:04.

The cationic synthetic polymer is selected from a group comprising cationic polyacrylamide, glyoxylated polyacrylamide, polyethyleneimine, polyamines, polyvinylamine, poly-diallyldimethylammonium chloride (poly-DADMAC), copolymer of acrylamide and diallyldimethylammonium chloride (DACMAC), polyamidoamine epihalohydrin and any of their mixtures. Polyamines are here understood as copolymers of dimethylamine and epichlorohydrin

Cationic polyacrylamide may be produced by copolymerizing acrylamide with a cationic monomer or methacrylamide with a cationic monomer. The cationic monomer may be selected from the group consisting methacryloyloxyethyl-trimethyl ammonium chloride, acryloyloxyethyltrimethyl ammonium chloride, 3-(methacrylamido) propyltrimethyl ammonium chloride, 3-(acryloylamido) propyltrimethyl ammonium chloride, diallyldimethyl ammonium chloride, dimethylaminoethyl acrylate, dimethylaminoethyl methacrylate, dimethylamino-propylacrylamide, dimethylaminopropylmethacrylamide, or a similar monomer. According to one preferred embodiment of the invention cationic polyacrylamide is copolymer of acrylamide or methacrylamide with (meth)acryloyloxyethyltrimethyl ammonium chloride. Cationic polyacrylamide may also contain other monomers, as long as its net charge is cationic and it has an acrylamide/methacrylamide backbone. An acrylamide or methacrylamide based polymer may also be treated after the polymerisation to render it cationic, for example, by using Hofmann or Mannich reactions.

According to one embodiment of the invention the aqueous dispersion of synthetic polymer may be obtained by polymerising a monomer within a coagulant matrix. The synthetic polymer dispersions suitable for use in the present invention are synthesised by using a controlled molecular weight cationic polyacrylamide polymerised within a coagulant matrix. These dispersion polymers are highly structured polymers demonstrating very little linearity. This is largely due to the inclusion of hydrophobic associative groups in the synthesis. The end result is a dispersion polymer system of high cationic charge density polymers having a low molar mass and medium cationic charge density polymers having high molecular weight. These dispersion polymers are free of volatile organic compounds (VOC's) or alkyphenol ethoxylate. The molecular weight of the dispersion polymer may be 5 - 7.7 million Dalton and it may have a charge density value of 3 - 6 meq/g.

According to the invention the synthetic polymer is used in amount of 5 - 40 weight-%, preferably 7.5 - 35 weight-%, more preferably 10 - 30 weight-%, based on the total dry weight of colloidal silica particles, synthetic polymer and binder.

According to one embodiment of the invention the synthetic polymer is used in amount of 5 - 40 weight-%, preferably 7.5 - 35 weight-%, more preferably 10 - 30 weight-%, calculated from dry weight of colloidal silica particles. The dry solids content of the used aqueous synthetic polymer dispersion is typically 20 - 45 weight-%, preferably 30 - 40 weight-%.

The synthetic polymer may have an average molecular weight > 100 000 Daltons, preferably 100 000 - 2 000 000 Daltons, more preferably 100 000 - 1 000 000 Daltons, still more preferably 120 000 - 200 000 Daltons. The average molecular weight can be measured by using gel permeation chromatography (GPC) or intrinsic viscosity. These methods are known as such for a person skilled in the art.

According to one embodiment polyaluminium chloride may be used instead of the aqueous dispersion of the synthetic polymer. According to another embodiment it is possible to use simultaneously both polyaluminium chloride and the aqueous dispersion of the synthetic polymer.

In this application polyaluminium chloride is understood as an inorganic polymer having a general formula $Al_n(OH)_mCl_{(3n-m)}$. In aqueous solution it is typically present as a highly charged aluminium complex $Al_{13}O_4(OH)_{24}(H_2O)_{12}^{7+}$ or $AlO_4Al_{12}(OH)_{24}(H_2O)_{24}^{7+}$. For a polyaluminium chloride the degree of neutralisation, i.e. the replacement of Cl ions with OH ions, may be expressed by using the unit basicity. The basicity of polyaluminium compound may be generally expressed by the following formula

$$\% \text{ Basicity} = 100 \times [OH]/3[Al]$$

The higher the basicity, the higher the degree of neutralisation. Polyaluminium chloride may have basicity in the range of 10 - 70 %, more preferably 10 - 50 %, measured by using standard method EN 1302.

According to the invention the admixture for forming a coating composition comprises in addition to colloidal silica particles and aqueous dispersion of the synthetic polymer also a binder solution. Preferably, a pre-mixture of colloidal silica particles and the aqueous dispersion of the synthetic polymer is first formed by mixing them together, and then combining the obtained pre-mixture with the binder solution. The composition is efficiently mixed during addition of the individual components. When the components of the coating composition are added in the described order, the viscosity of the coating composition remains at an acceptable level during preparation.

The binder solution is used in amount of 5 - 50 weight-%, preferably 7.5 - 25 weight-%, more preferably 10 - 50 weight-%, calculated from the total dry weight of colloidal silica particles, synthetic polymer and binder.

The binder, which is suitable for use in the present invention, may be selected from a group comprising polyvinyl alcohol, latex emulsion polymers, such as styrene acrylate latex, polyvinyl acetate latex, styrene butadiene latex, polyurethane, and polyacrylamides, and any of their mixtures. According to one preferred embodiment of the invention the binder solution is a starch solution. Starch solution is here understood as an aqueous solution of starch that has been prepared, e.g. cooked, according to methods that are as such well-known for a person skilled in the art.

Starch, which may be used in the invention, may be any suitable native starch, such as potato, rice, corn, waxy corn, wheat, barley or tapioca starch. Starches having an amylopectin content > 70 %, preferably > 75 %, more preferably > 85 %, are advantageous. Preferably the starch solution comprises cationic starch, which comprises cationic groups, such as quaternized ammonium groups. Degree of substitution (DS), indicating the number of cationic groups in the starch on average per glucose unit, is typically 0.01 - 0.20, preferably > 0.06, more preferably 0.07 -0.15. When cationic starch is used, it is preferably only slightly degraded or non-degraded, and modified solely by cationisation.

However, according to another embodiment it is possible to use degraded starch that is obtained by subjecting the starch to oxidative, thermal, acidic or enzymatic degradation, thermal or enzymatic degradation being preferred. Hypochlorite, peroxide sulphate, hydrogen peroxide or their mixtures may be used as oxidising agents. Degraded starch has typically an average molecular weight (Mn) 500 - 10 000, which can be determined by known gel chromatography methods. The intrinsic viscosity is typically 0.05 to 0.12 dl/g, determined, for example, by known viscosimetric methods.

It is also possible to employ chemically modified starches, such as hydroxyethyl or hydroxypropyl starches and starch derivatives. Also other polysaccharides, e.g. white or yellow dextrin, may be used to replace starch wholly or partially.

According to one embodiment of the invention a water-soluble divalent metal salt, preferably an alkaline earth metal salt, may be mixed to the coating composition. Possible divalent metal salts are calcium and magnesium salts, such as calcium chloride, calcium formate, magnesium chloride or magnesium formate, or any of their mixtures. The divalent metal salt may be used in amount of 2 - 25 weight-%, preferably 5 - 15 weight-%, more preferably 6 - 12 weight-%, based on the dry solids content of the coating composition. It has been observed that the effect obtained with the divalent metal salt may be enhanced when it is added to the coating composition according to the present invention. It is assumed that the divalent salt is more effectively retained on the surface, whereby its dosage may also be decreased.

The composition may comprise also one or several conventional paper coating or surface sizing additives. Possible additives are, for example, preservatives, biocides, dispersing agents, defoaming agents, lubricants and/or hardeners.

When water-soluble divalent metal salt is used, it is possible to pre-mix the divalent metal salt, such as calcium chloride, with the colloidal silica particles. This may improve the homogeneity of the final coating composition, and the dosage of the divalent metal salt.

In the context of this application the printing substrate is in sheet form and comprises wood or lignocellulosic fibre material. The substrate may comprise fibres from hardwood trees or softwood trees or a combination of both fibres. The fibres may be obtained by any suitable pulping or refining technique normally employed in paper making, such as thermomechanical pulping (TMP), chemimechanical (CMP), chemithermomechanical pulping (CTMP), groundwood pulping, alkaline sulfate (kraft) pulping, acid sulfite pulping, and semichemical pulping. The substrate may comprise only virgin fibres or recycled fibres or a combination of both. The weight of the printing sheet substrate is 30 - 800 $g/m^2$, typically 30 - 600 $g/m^2$, more typically 50 - 500 $g/m^2$, preferably 60 - 300 $g/m^2$, more preferably 60 - 120 $g/m^2$, even more preferably 70 - 100 $g/m^2$.

According to one embodiment of the invention the coating composition is used for coating of a sheet-like printing substrate for water-based inks.

According to another embodiment of the invention the coating composition is used for coating of a sheet-like printing substrate for ink jet printing.

According to yet another embodiment of the invention the coating composition is used for coating of a sheet-like printing substrate for flexogravure or rotogravure printing.

According to one embodiment of the present invention the coating composition may be applied to at least one surface of the sheet-like printing substrate in amount of 0.1 - 7 $g/m^2$/side, preferably 0.2 - 5 $g/m^2$/side, more preferably 0.3 - 3 $g/m^2$/side. If the sheet-like printing substrate is used for ink jet printing the coating composition may be applied to at least one surface of the sheet-like printing substrate in amount of 0.1 - 5 $g/m^2$/side, preferably 0.4 - 4 $g/m^2$/side, more preferably 0.6 - 3 $g/m^2$/side.

EXPERIMENTAL

An embodiment of the invention is further described in the following non-limiting example.

Coating compositions are prepared by using a low shear mixer. First the starch is pre-cooked, whereby a defined amount of water and starch are added in to a coating container, and the mixture is heated up to near the boiling point.

After the pre-cooking of starch the other components, i.e. aqueous dispersion of the synthetic polymer and colloidal silica particles, are added under proper shear action, which ensures thorough mixing of the components with each other. The compositions are prepared according the following Table 1. The desired solid content of the coating composition is 15 - 16 weight-%.

Table 1. Components of the different test compositions

| Sample | Starch (kg/t) | Silica (kg/t) | Polymer (kg/t) | $CaCl_2$ (kg/t) | Sum (kg/t) | Coat Weight (g/m²/side) |
|---|---|---|---|---|---|---|
| Ref. | 24.6 | 0.0 | 0.0 | 5.4 | 30.0 | 1.3 |
| Comp. A | 28.5 | 28.5 | 8.0 | 8.0 | 73.0 | 3.3 |
| Comp. B | 15.2 | 15.2 | 4.3 | 4.3 | 39.0 | 1.7 |

Recording sheet substrate is 80 $g/m^2$ wood-free base paper including both softwood and hardwood pulps and a filler. Ash content of base paper is roughly 20 % and it is not hydrophobic sized. The test compositions according to Table 1 are applied to the base paper by using meter size press (Metso OptiSizer) at a speed of 500 m/min. By controlling the solid content of the composition, nip pressure, rod grooving and size press running speed, the desired pickup weight is achieved. After the coating the paper sheet is dried and calandered. Calandering is performed as so called soft calandering at temperature 70 °C and with nip load 50 kN/m.

Samples are printed with HP Business Inkjet 2800 (dye) and HP Officejet PRO 8000 (pigment). HP Business Inket 2800 is equipped with original HP ink cartridges: HP10 (black) and HP11 (cyan, magenta, yellow). HP Officejet Pro 8000 is equipped original HP 940 ink cartridges (black, cyan, magenta, yellow).

Following parameters are studied: ink density, colour gamut and print through.

Ink density is measured according standard methods ISO 5-3:1995, ISO 5-4:1995. Ink density is measured with Techkon SpectroDens-densitometer, manufactured by Techkon GmbH.

Colour gamut (or simply gamut) is total range of colours than are reproduced with given set of inks, printing device and on given paper stock. For gamut measurement certain print layout need to be printed with current ink-paper-print device combination. Minimum requirement for this print layout is to include solid colour fields of primary and secondary colours. In subtractive colour model cyan, magenta and yellow are the primary colours and red, green and blue are the secondary colours.

Spectrophotometric measurement device need to be employed for CIE L*, a,* b* - measurements (later L*, a*, b*). In this case Techkon SpectroDens -device was in use. L*, a*, b* -values are measured from solid primary and secondary color patches and a*, b* -values are used as (x, y) values for X, Y -co-ordinates. These six (x, y)-values creates an uneven planar hexagon and area inside this hexagon is described as reproducible colour area, colour gamut.

Print through is the unwanted appearance of a printed image on the reverse side of the print. It is a measured reflectance value (Y-value, C/2° uv-excluded) from the reverse side of K100% inkjet printed patch. The print-through is calculated as the on the reverse side of the print and multiplied by thousand (1000).

$$PT = {}^{10}log\,(R_{R\infty}/R_{RP})$$

where

$R_{R\infty}$ = The reflectance of the reverse side of the unprinted paper (Y-value),
$R_{RP}$ = The reflectance of the reverse side

The results for the different coating composition are shown in Table 2.

Table 2. Results of the experiments.

|  | Pigment Ink | | | Dye Ink | | |
|---|---|---|---|---|---|---|
| Sample | Ref. | Comp. A | Comp. B | Ref. | Comp. A | Comp. B |
| Density |  |  |  |  |  |  |
| K | 2.17 | 2.27 | 2.20 | 2.40 | 2.57 | 2.48 |
| C | 1.34 | 1.44 | 1.38 | 1.20 | 1.38 | 1.34 |
| M | 1.16 | 1.24 | 1.21 | 0.87 | 0.95 | 0.92 |
| Y | 1.16 | 1.22 | 1.19 | 1.08 | 1.19 | 1.16 |
| Gamut | 8720 | 9483 | 9263 | 7554 | 9153 | 8700 |
| Print through | 47 | 38 | 40 | 65 | 49 | 51 |

It can be seen from Table 2 that the density values are higher when substrate is treated according to the invention by using Compositions A and B. Increase in density values can be seen both on dye and pigment inkjet systems. Gamut values are similar to density results, use of compositions according to the invention give clearly improved gamut values than the Reference. Print through is reduced when compositions according to the invention are used. In other words ink has lower tendency to penetrate through the paper if the inventive coating composition is used.

**Claims**

1.	Method for manufacturing a coating composition for a printing substrate comprising lignocellulosic fibres, by mixing together

- 30 - 80 weight-% of colloidal silica particles having a diameter in the range of 0.5 - 150 nm, and
- an aqueous dispersion of a synthetic polymer, wherein the synthetic polymer is selected from a group comprising cationic polyacrylamide, glyoxylated polyacrylamide, polyethyleneimine, polyamine, polyvinylamine, poly-diallyldimethylammonium chloride (poly-DADMAC), copolymer of acrylamide and diallyldimethylammonium chloride (DACMAC), and polyamidoamine epihalohydrin, and where the amount of the synthetic polymer is 5 - 40 weight-%, as well as
- a binder solution,

the weight of the colloidal silica particles and synthetic polymer being based on the total dry weight of colloidal silica particles, synthetic polymer and binder, and using the obtained mixture for forming a coating composition to be applied on the printing substrate comprising lignocellulosic fibres.

**2.** Method according to claim 1, **characterised in** using colloidal silica particles, which have a diameter in the range of 0.5 - 50 nm, more preferably 1 - 15 nm, even more preferably 2 - 7 nm.

**3.** Method according to claim 1 or 2, **characterised in** using colloidal silica in amount of 50 - 80 weight-%, based on the total dry weight of colloidal silica particles, synthetic polymer, and binder.

**4.** Method according to any of preceding claims 1 - 3, **characterised in** using anionic colloidal silica.

**5.** Method according to claim 1, **characterised in that** the synthetic polymer is used in amount of 7.5 - 35 weight-%, more preferably 10 - 30 weight-%, based on the total dry weight of colloidal silica particles, synthetic polymer and binder.

**6.** Method according to any of claims 1 - 5, **characterised in that** the binder is selected from a group comprising polyvinyl alcohol, latex emulsion polymers, such as styrene acrylate latex, polyvinyl acetate latex, styrene butadiene latex, polyurethane, and polyacrylamides, and any of their mixtures.

**7.** Method according to claim 1, **characterised in** mixing water-soluble divalent metal salt, preferably an alkaline earth metal salt, such as calcium chloride, magnesium chloride, calcium formate or magnesium formate, to the coating composition.

**8.** Method according to claim 7, **characterised in** using divalent metal salt in amount of 2 - 25 weight-%, preferably 5 - 15 weight-%, more preferably 6 - 12 weight-%, based on the dry solids content of the coating composition.

**9.** Method according to claim 1, **characterised in** forming first a pre-mixture of colloidal silica particles and the aqueous dispersion of the synthetic polymer by mixing them together, and then combining the pre-mixture with the binder solution.

**10.** Coating composition for use in coating of a printing substrate, prepared according to any of claims 1 - 9, the composition comprising

- binder, and
- a dispersed cationic component derived from synthetic polymer, the synthetic polymer being selected from a group comprising cationic polyacrylamide, glyoxylated polyacrylamide, polyethyleneimine, polyamine, polyvinylamine, poly-diallyldimethylammonium chloride (poly-DADMAC), copolymer of acrylamide and diallyldimethylammonium chloride (DACMAC), and polyamidoamine epihalohydrin, wherein the synthetic polymer is used in amount of 5 - 40 weight-%, and
- 30 - 80 weight-% of colloidal silica particles having a diameter in the range of 0.5 - 150 nm,

the weight of the colloidal silica particles and synthetic polymer being based on the total dry weight of colloidal silica particles, synthetic polymer and binder.

**11.** Use of a coating composition according to claim 10 for coating of a sheet-like printing substrate for water-based inks.

**12.** Use of a coating composition according to claim 10 for coating of a sheet-like printing substrate for ink jet printing.

**13.** Use of a coating composition according to claim 10 for coating of a sheet-like printing substrate for flexogravure or rotogravure printing.

**14.** Use according to claim 11, 12 or 13, **characterised in that** the amount of coating composition applied to at least one surface of the sheet-like printing substrate is 0.1 - 7 $g/m^2$/side, preferably 0.2 - 5 $g/m^2$/side, more preferably 0.3 - 3 $g/m^2$/side.

**Patentansprüche**

**1.** Verfahren zur Herstellung einer Beschichtungszusammensetzung für ein Drucksubstrat, das Lignocellulosefasern umfasst, indem miteinander vermischt werden:

- 30-80 Gew.-% von kolloidalen Siliciumdioxidpartikeln mit einem Durchmesser im Bereich von 0,5-150 nm und
- eine wässrige Dispersion eines synthetischen Polymers, wobei das synthetische Polymer ausgewählt ist aus einer Gruppe, umfassend kationisches Polyacrylamid, glyoxyliertes Polyacrylamid, Polyethylenimin, Polyamin, Polyvinylamin, Polydiallyldimethylammoniumchlorid (poly-DADMAC), ein Copolymer von Acrylamid und Diallyldimethylammoniumchlorid (DACMAC) und Polyamidoamin-Epihalogenhydrin, und wobei die Menge des synthetischen Polymers 5-40 Gew.-% beträgt, sowie
- eine Bindemittellösung,

wobei das Gewicht der kolloidalen Siliciumdioxidpartikel und des synthetischen Polymers auf dem gesamten Trockengewicht von kolloidalen Siliciumdioxidpartikeln, synthetischem Polymer und Bindemittel basiert, und indem die erhaltene Mischung verwendet wird, um eine Beschichtungszusammensetzung zum Auftragen auf das Drucksubstrat, das Lignocellulosefasern umfasst, zu bilden.

2. Verfahren gemäß Anspruch 1, **dadurch gekennzeichnet, dass** kolloidale Siliciumdioxidpartikel, die einen Durchmesser im Bereich von 0,5-50 nm, bevorzugter 1-15 nm, noch bevorzugter 2-7 nm, besitzen, verwendet werden.

3. Verfahren gemäß Anspruch 1 oder 2, **dadurch gekennzeichnet, dass** kolloidales Siliciumdioxid in einer Menge von 50-80 Gew.-%, basierend auf dem gesamten Trockengewicht von kolloidalen Siliciumdioxidpartikeln, synthetischem Polymer und Bindemittel, verwendet wird.

4. Verfahren gemäß einem der vorangehenden Ansprüche 1 bis 3, **dadurch gekennzeichnet, dass** anionisches kolloidales Siliciumdioxid verwendet wird.

5. Verfahren gemäß Anspruch 1, **dadurch gekennzeichnet, dass** das synthetische Polymer in einer Menge von 7,5-35 Gew.-%, bevorzugter 10-30 Gew.-%, basierend auf dem gesamten Trockengewicht von kolloidalen Siliciumdioxidpartikeln, synthetischem Polymer und Bindemittel, verwendet wird.

6. Verfahren gemäß einem der Ansprüche 1 bis 5, **dadurch gekennzeichnet, dass** das Bindemittel ausgewählt ist aus einer Gruppe, umfassend Polyvinylalkohol, Latexemulsionspolymere, wie Styrolacrylatlatex, Polyvinylacetatlatex, Styrolbutadienlatex, Polyurethan und Polyacrylamide und eine beliebige ihrer Mischungen.

7. Verfahren gemäß Anspruch 1, **dadurch gekennzeichnet, dass** ein wasserlösliches zweiwertiges Metallsalz, vorzugsweise ein Erdalkalimetallsalz, wie Calciumchlorid, Magnesiumchlorid, Calciumformiat oder Magnesiumformiat, in die Beschichtungszusammensetzung eingemischt wird.

8. Verfahren gemäß Anspruch 7, **dadurch gekennzeichnet, dass** das zweiwertige Metallsalz in einer Menge von 2-25 Gew.-%, bevorzugt 5-15 Gew.-%, bevorzugter 6-12 Gew.-%, basierend auf dem Trockenfeststoffgehalt der Beschichtungszusammensetzung, verwendet wird.

9. Verfahren gemäß Anspruch 1, **dadurch gekennzeichnet, dass** zuerst eine Vormischung aus kolloidalen Siliciumdioxidpartikeln und der wässrigen Dispersion des synthetischen Polymers gebildet wird, indem sie miteinander vermischt werden, und dann die Vormischung mit der Bindemittellösung kombiniert wird.

10. Beschichtungszusammensetzung zur Verwendung beim Beschichten eines Drucksubstrates, hergestellt gemäß einem der Ansprüche 1 bis 9, wobei die Zusammensetzung umfasst

- Bindemittel und
- eine dispergierte kationische Komponente, die aus einem synthetischen Polymer stammt, wobei das synthetische Polymer ausgewählt ist aus einer Gruppe, umfassend kationisches Polyacrylamid, glyoxyliertes Polyacrylamid, Polyethylenimin, Polyamin, Polyvinylamin, Polydiallyldimethylammoniumchlorid (poly-DADMAC), ein Copolymer von Acrylamid und Diallyldimethylammoniumchlorid (DACMAC) und Polyamidoamin-Epihalogenhydrin, wobei das synthetische Polymer in einer Menge von 5-40 Gew.-% verwendet wird, und
- 30-80 Gew.-% an kolloidalen Siliciumdioxidpartikeln mit einem Durchmesser im Bereich von 0,5-150 nm,

wobei das Gewicht der kolloidalen Siliciumdioxidpartikel und des synthetischen Polymers auf dem gesamten Trockengewicht von kolloidalen Siliciumdioxidpartikeln, synthetischem Polymer und Bindemittel basiert.

11. Verwendung einer Beschichtungszusammensetzung gemäß Anspruch 10 zum Beschichten eines bahnförmigen Drucksubstrats für wasserbasierte Tinten.

**12.** Verwendung einer Beschichtungszusammensetzung gemäß Anspruch 10 zum Beschichten eines bahnförmigen Drucksubstrats für Tintenstrahldrucken.

**13.** Verwendung einer Beschichtungszusammensetzung gemäß Anspruch 10 zum Beschichten eines bahnförmigen Drucksubstrats für Flexotiefdruck ("flexogravure printing") oder Rotationstiefdruck ("rotogravure printing").

**14.** Verwendung gemäß Anspruch 11, 12 oder 13, **dadurch gekennzeichnet, dass** die Menge an Beschichtungszusammensetzung, die auf wenigstens eine Oberfläche des bahnförmigen Drucksubstrats aufgetragen wird, 0,1-7 g/m$^2$/Seite, bevorzugt 0,2-5 g/m$^2$/Seite, bevorzugter 0,3-3 g/m$^2$/Seite, beträgt.

**Revendications**

**1.** Procédé de fabrication d'une composition de revêtement pour un substrat d'impression comprenant des fibres lignocellulosiques, en mélangeant ensemble

- 30 à 80 % en poids de particules de silice colloïdale ayant un diamètre dans la plage de 0,5 à 150 nm, et
- une dispersion aqueuse d'un polymère de synthèse, dans lequel le polymère de synthèse est choisi dans un groupe comprenant un polyacrylamide cationique, un polyacrylamide glyoxylé, la polyéthylèneimine, une polyamine, une polyvinylamine, le poly(chlorure de diallyldiméthylammonium) (poly-DADMAC), un copolymère d'acrylamide et de chlorure de diallyldiméthylammonium (DACMAC), et une poly(amidoamine épihalogénohydrine), et où la quantité du polymère de synthèse est de 5 à 40 % en poids, ainsi que
- une solution de liant,

le poids des particules de silice colloïdale et du polymère de synthèse étant basé sur le poids sec total des particules de silice colloïdale, de polymère de synthèse et de liant,
et en utilisant le mélange obtenu pour former une composition de revêtement à appliquer sur le substrat d'impression comprenant des fibres lignocellulosiques.

**2.** Procédé selon la revendication 1, **caractérisé par** l'utilisation de particules de silice colloïdale, qui ont un diamètre dans la plage de 0,5 à 50 nm, de manière davantage préférée de 1 à 15 nm, de manière encore davantage préférée de 2 à 7 nm.

**3.** Procédé selon la revendication 1 ou 2, **caractérisé par** l'utilisation de silice colloïdale dans une quantité de 50 à 80 % en poids, rapporté au poids sec total de particules de silice colloïdale, de polymère de synthèse et de liant.

**4.** Procédé selon l'une quelconque des revendications 1 à 3, **caractérisé par** l'utilisation de silice colloïdale anionique.

**5.** Procédé selon la revendication 1, **caractérisé en ce que** le polymère de synthèse est utilisé dans une quantité de 7,5 à 35 % en poids, de manière davantage préférée de 10 à 30 % en poids, rapporté au poids sec total de particules de silice colloïdale, de polymère de synthèse et de liant.

**6.** Procédé selon l'une quelconque des revendications 1 à 5, **caractérisé en ce que** le liant est choisi dans un groupe comprenant le poly(alcool vinylique), des polymères d'émulsion de latex, tels qu'un latex de styrène acrylate, un latex de poly(acétate de vinyle), un latex de styrène butadiène, le polyuréthane, et des polyacrylamides, et l'un quelconque de leurs mélanges.

**7.** Procédé selon la revendication 1, **caractérisé par** le mélange d'un sel de métal divalent soluble dans l'eau, de préférence un sel de métal alcalinoterreux, tel que le chlorure de calcium, le chlorure de magnésium, le formiate de calcium ou le formiate de magnésium, dans la composition de revêtement.

**8.** Procédé selon la revendication 7, **caractérisé par** l'utilisation d'un sel de métal divalent dans une quantité de 2 à 25 % en poids, de préférence de 5 à 15 % en poids, de manière davantage préférée de 6 à 12 % en poids, rapporté à la teneur en matière sèche de la composition de revêtement.

**9.** Procédé selon la revendication 1, **caractérisé par** la formation en premier lieu d'un pré-mélange de particules de silice colloïdale et de la dispersion aqueuse du polymère de synthèse en les mélangeant ensemble, puis la combinaison du pré-mélange avec la solution de liant.

10. Composition de revêtement à utiliser dans le revêtement d'un substrat d'impression, préparé selon l'une quelconque des revendications 1 à 9, la composition comprenant

- un liant, et
- un composant cationique dispersé dérivé d'un polymère de synthèse, le polymère de synthèse étant choisi dans un groupe comprenant un polyacrylamide cationique, un polyacrylamide glyoxylé, la polyéthylèneimine, une polyamine, une polyvinylamine, le poly(chlorure de diallyldiméthylammonium) (poly-DADMAC), un copolymère d'acrylamide et de chlorure de diallyldiméthylammonium (DACMAC), et une poly(amidoamine épihalogénohydrine), dans laquelle le polymère de synthèse est utilisé dans une quantité de 5 à 40 % en poids, et
- 30 à 80 % en poids de particules de silice colloïdale ayant un diamètre dans la plage de 0,5 à 150 nm,

le poids des particules de silice colloïdale et de polymère de synthèse étant rapporté au poids sec total de particules de silice colloïdale, de polymère de synthèse et de liant.

11. Utilisation d'une composition de revêtement selon la revendication 10, pour revêtement d'un substrat d'impression de type feuille pour des encres à base d'eau.

12. Utilisation d'une composition de revêtement selon la revendication 10, pour revêtement d'un substrat d'impression de type feuille pour une impression à jet d'encre.

13. Utilisation d'une composition de revêtement selon la revendication 10, pour revêtement d'un substrat d'impression de type feuille pour une impression de flexogravure ou rotogravure.

14. Utilisation selon la revendication 11, 12 ou 13, **caractérisée en ce que** la quantité de composition de revêtement appliquée à au moins une surface du substrat d'impression de type feuille est de 0,1 à 7 g/m$^2$/côté, de préférence 0,2 à 5 g/m$^2$/côté, de manière davantage préférée 0,3 à 3 g/m$^2$/côté.

**EP 2 733 260 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1775141 A
- US 20070202281 A
- US 2001004487 A
- EP 0634283 A